# EUROPEAN PATENT SPECIFICATION

(11) **EP 2 289 862 B1**
(45) Date of publication and mention of the grant of the patent: **21.03.2012**
(21) Application number: 09386022.9
(22) Date of filing: 31.07.2009
(51) Int. Cl.: C04B 41/45, C09D 7/12, E04B 1/78, F28D 20/02

(54) **Thermal insulation system for buildings and for liquid storage and transportation systems**
Wärmeisoliersystem für Gebäude und für Flüssigkeitsspeicherung und -transport Systeme
Système d'isolation thermique pour bâtiments et pour systèmes de stockage et le transport de liquides

(43) Date of publication of application: 02.03.2011
(73) Proprietor: Druckfarben Hellas S.A., 193 00 Aspropyrgos (GR)
(72) Inventor: Cooray, Boyd, 145 62 Kifissia (GR)
(74) Representative: Roukounas, Dimitrios

(56) References cited:
- WO-A1-2007/112294
- US-A1- 2003 124 278
- US-A1- 2004 229 054
- US-A1- 2007 209 317

## Description

### TECHNICAL FIELD

The invention relates to the field of thermal insulation materials and systems that contribute to energy conservation and efficient use of energy sources.

### BACKGROUND OF THE INVENTION

Insulation of buildings to achieve indoor climatic comfort at low energy demand and reducing evaporative loss of materials and energy demand for maintaining desired temperature of liquids through insulation would contribute greatly to energy conservation and improve efficient use of energy sources.

Insulation Systems that contribute to energy conservation and improved usage of energy sources have been the subject of several publications. US Patent 6,858,280 refers to Microsphere Insulation Systems comprising variously shaped forms filled with hollow glass microspheres for use with or without evacuation of entrained air or by backfilling the form with gases such as argon, nitrogen or carbon dioxide. US Patent 5,713,974 refers to the use of microspheres in elastomeric roof coatings. A pour in place water heater foam insulation system is disclosed in US Patent 6,148, 8774. EP1, 921, 398 discloses a transparent insulation system with a trap for reducing the heat loss of heat storage surfaces and selective transmission of light to reduce the heating energy needs of buildings.

Further insulating compositions are known from US 2004/229054 A, US 2007/209317 A and US 2003/124278 A.

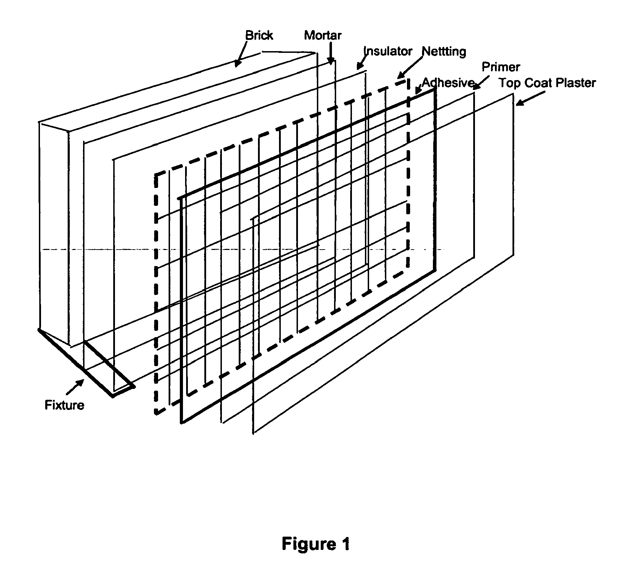

Exterior Insulation and Finish Systems (EIFS) describe an insulating, decorative and protective finish system for exterior walls that can be installed on any type of construction. The granting of the first patent in 1952 for the use of Expanded Polystyrene insulation boards led to the marketing of EIFS in 1963. A traditional EIFS is a non-load bearing cladding consisting of five components (Figure 1), an insulation board, an adhesive and/or mechanical fastener to attach the insulation board to the substrate, reinforcing mesh for impact resistance, a basecoat and a decorative and protective finish coat.

The cost of installation and maintenance of such insulating systems, the need for specialized labour to ensure that installation is carried out meticulously, the need for the use of unique components and supporting forms and insulating envelopes, the cost of material employed and cost of maintenance of insulation solutions contained in the prior art, lead to a continuous search for more cost effective technical solutions that simplify the materials required, permit the application of insulating systems by general painters and contractors and lower the cost of such systems to improve the accessibility of insulation technology and extend its use to all domestic dwellings and other buildings.

Intelligent Temperature Management using building materials modified with Micronal^{R} phase change materials has been divulged by BASF, Germany together with Smartboard^{™}, representing a solution in lightweight construction that offers a thermal conductivity of approximately 0,18 W/mK. These lightweight plaster boards contain 26% of Micronal^{R}, a wax encapsulated polymer particulate product for achieving a thermal conductivity of approximately 0,18 W/mK. This translates to 6kg per square metre of Micronal^{R} per square metre of Smartboard^{™} at a thickness of 1,5cm.

The application of 3M Scotchlite^{™} Glass Bubbles based on borosilicate glass and 3M Zeeospheres^{™} Ceramic Microspheres in Construction, Automotive, Aerospace and Marine applications have been well documented in the literature available from 3M Company. The application of such materials in thermal insulation products is of particular interest as the thermal conductivity of these lightweight glass bubbles is in the range 0,044 to 0,188 W/m.K at 20°C, as theoretically determined, using Maxwell Formula.

The use of Expancel^{R} microspheres in thermal insulation coatings is described in Technical Bulletin No 42 of Expancel Company in which the relatively low thermal conductivity of these thermoplastic polymer hollow spheres filled with a hydrocarbon liquid is used to design such coatings. The thermal conductivity of a coating containing 42 dry volume% of some Expancel^{R} grades was measured by EN 12664 test method, and reported to be in the range 0,071 to 0,085 W/m.K

### SUMMARY OF THE INVENTION

The present invention provides low cost insulating compositions, which are easily applied at the required thicknesses without the need for specialised equipment, multiple components and supporting frames, fixtures or netting, whereas after their application they show no sagging, cracks or shrinkage at the edges.

The insulating compositions of the present invention are in the form of aqueous dispersions which comprise hollow borosilicate glass spheres or ceramic microspheres, wax encapsulated thermoset particles, spherical thermoplastic microspheres and emulsion polymer or re-dispersible powder binder.

The amount of the hollow borosilicate glass spheres or ceramic microspheres in the compositions of the present invention is within the range of 3-18%, preferably 12-18% and more preferably 14-16%.

The amount of the wax encapsulated thermoset particles in the compositions of the present invention is within the range of 5-30%, preferably 10-20% and more preferably 14-16%.

The amount of the spherical thermoplastic microspheres in the compositions of the present invention is within the range of 0,2-10%, preferably 5-10% and more preferably 6-8%.

The amount of the emulsion polymer or re-dispersible powder binder in the compositions of the present invention is within the range of 5-40%, preferably 10-30% and more preferably 12-25%

The above ranges refer to weight percentages (weight of an ingredient per total weight of the composition).

The insulating compositions of the present invention are preferably in the form of a paste which may be applied as a primer or top coat for example in interior and/or exterior of new and existing buildings or for the insulation of pipes, cylinders and tanks containing and transporting hot or cold liquids or low boiling point liquids such as solvents, petrol etc to minimize evaporative losses and to maintain the required temperatures at a lower energy, materials and applications cost relative to systems disclosed in the prior art. The compositions of the present invention may also be converted into insulating paints, plasters, boards or panels.

The term "dispersion" as used herein means the uniform distribution of the solid particles contained in the ingredients of this invention in water with or without the use of wetting and dispersing additives commonly used in water based paints when processed using low shear dispersion equipment that ensures the preservation of the particle integrity of the ingredients.

The term "hollow borosilicate glass spheres" as used herein refers to hollow, evacuated soda lime borosilicate glass microspheres of true particle density in the range 0,125 to 0,6 g/ml, particle size average range of 10-120 microns, wall thickness of 0,5 to 1,5 microns and compressive strength of 17 to 1240 bars. The thermal conductivity (W/m.K) at 4°C of "hollow borosilicate glass spheres" range from 0,042 to 0,182 as calculated based on Maxwell Formula.

The term "ceramic microspheres" as used herein refers to solid spheres of silica-alumina ceramic alloy with a true density of 0,5-2,7 g/ml, particle size average range of 10-220 microns and crush strength of 2000- 80,000 psi.

The term "wax encapsulated thermoset particles" as used herein refers to 2 to 50 micron sized, highly cross-linked polymer particles containing in their core a storage medium of waxes that absorb heat as the phase change temperature of the wax is exceeded and stores this energy as latent heat. The specific heat capacity of such particles is approximately 100 kJ/Kg, as per ISO 11357-3 Test Method and the phase change temperature range is 20 to 28°C. The thermal conductivity of a 26-30% (w/w) loaded particle board with these particles and formed to a thickness of 1,5 cm is approximately 0,18 W/m.K

The term "spherical thermoplastic microspheres" as used herein refers to spherical thermoplastic polymer particles with a mean diameter of 5-25 microns with a gas proof polymeric shell that encapsulates a blowing agent such as liquid isobutane.

The particles may expand to 40-50 times their original diameter and show a reduction in density from 1200 to 40 kg/cubic metre when the microspheres are exposed to heat. The expansion and contraction process is reversible over 1000 cycles while maintaining particle integrity due to the resilience of the particles. The thermal conductivity of a 42% by solids volume loaded insulating coating with these particles is approximately 0,19 W/m.K

The term "emulsion polymer" as used herein refers to commercially available binders such as vinyl acetate co-polymer emulsions, styrene-acrylic emulsions, pure acrylic emulsions, polyurethane emulsions, alkyd emulsions and poly-siloxane and silicone emulsions used in decorative and industrial water based surface coatings and manufactured using appropriate polymerization processes. The term "re-dispersible powder binder" refers to commercially available dry powder binders used in decorative and industrial fillers, sealants, caulks and cements products that may be supplied as powders that may be mixed with water immediately prior to their use.

The term "cellulose based thickening agents" as used herein refers to solid and liquid forms of cellulose and modified cellulose based thickeners used in water based decorative paints.

The term "associative thickeners" as used herein refers to synthetic thickeners consisting of acrylic, urethane and other polymers and oligomers commonly used in water based decorative paints.

The term "microspheres or microsphere particles" or "particles" as used herein refers to hollow or solid bubbles or beads with or without encapsulated content that help to reduce thermal conduction and in the size range 0,1 to 250 microns and all individual values and ranges therein.

The term "paste" or insulating paste" as used herein means the paste-like physical form with low sag which is suitable for application using a trowel or spatula implement or spray with minimal product loss at wet thicknesses ranging from 0,01 to 1,0 cm which dries to a hard coating. Further layers may be applied on the first layer to build up the dry thickness and thereby improve thermal resistance of the insulating system.

The term "primer" or "insulating primer" as used herein means the first layer applied over a substrate to ensure adhesion to the substrate as well as to ensure the adhesion of subsequent products applied over the primer while offering a level of thermal insulation including solar energy reflection that is superior to general purpose or substrate-specific primers used in decorative and industrial applications.

The term "top coat" or "insulating top coat" as used herein means the final coating applied over a primed or un-primed substrate that is directly in contact with the atmosphere, applied using brush, roller, trowel, spatula or spray techniques, providing a decorative protective and aesthetic finish including smooth, textured or plaster finishes. The "top coat" or "insulating top coat" of this invention offers a level of thermal insulation including solar energy reflection superior to that offered by general purpose or substrate-specific top coats used for decorative and industrial coatings purposes.

The term "titanium dioxide pigment" as used herein refers to coated or uncoated grades of rutile or anatase titanium dioxide used commonly in the manufacture of decorative architectural coatings.

### BRIEF DESCRIPTION OF THE DRAWNINGS

Figure 1 shows an example of an insulating system of the prior art.
Figure 2 shows an example of an insulating system generated by a composition of the present invention.

### DETAILED DESCRIPTION OF THE INVENTION

The present invention provides insulating compositions in the form of aqueous dispersions that comprise hollow borosilicate glass spheres or ceramic microspheres, wax encapsulated thermoset particles, spherical thermoplastic microspheres and emulsion polymers or re-dispersible powder binders.

The amount of the hollow borosilicate glass spheres or ceramic microspheres in the compositions of the present invention is within the range 3-18%, preferably 12-18% and more preferably 14-16%.

The amount of the wax encapsulated thermoset particles in the compositions of the present invention is within the range 5-30%, preferably 10-20% and more preferably 14-16%.

The amount of the spherical thermoplastic microspheres in the compositions of the present invention is within the range 0,2-10%, preferably 5-10% and more preferably 6-8%.

The amount of the emulsion polymer or re-dispersible powder binder in the compositions of the present invention is within the range of 5-40%, preferably 10-30% and more preferably 12-25%

The above ranges refer to weight percentages (weight of an ingredient per total weight of the composition).

The insulating compositions of the present invention are preferably in the form of a paste which may be applied as a mortar and also as a primer or top coat for example in interior and/or exterior of new and existing buildings or for the insulation of pipes, cylinders and tanks containing and transporting hot or cold liquids or low boiling point liquids such as solvents, petrol etc to minimize evaporative losses and to maintain the required temperatures at a lower energy, materials and applications cost relative to systems disclosed in the prior art. The compositions of the present invention may also be converted into insulating paints, plasters, boards or panels.

The compositions of the present invention may optionally comprise additional ingredients known from the state of the art such as plasticizers, thickeners, dispersants, defoamers, pigments, aggregates and additives commonly used in sealants, paints and plasters.

The compositions of the present invention may be applied by trowel, spatula or spray to various surfaces, such as interior or exterior building walls, ceilings and roofs or tanks, pipes and cylinders that are to be thermally insulated. Optionally, the compositions of the present invention may be converted into dry insulation boards either in combination with common range of mineral, fibre and synthetic board, particle or panel forming materials or by itself. Optionally, the compositions of the present invention may be converted into an insulating primer for roller, brush, spatula, trowel or spray application on various surfaces such as building walls, ceilings and roofs and on tanks, pipes and cylinders that are to be thermally insulated. Optionally, the compositions of the present invention may be converted into an insulating top coat for roller, brush, spatula, trowel or spray application for example on building walls, ceilings and roofs and on tanks, pipes and cylinders that are to be thermally insulated. Optionally, the compositions of the present invention may be converted into an insulating plaster or render for spatula, trowel or heavy duty spray application for example on building walls and over EIFS systems.

The combination of the insulating technologies offered by hollow borosilicate glass spheres or ceramic microspheres, thermoset polymer particles with encapsulated wax and thermoplastic microspheres with encapsulated hydrocarbon with binding technology of emulsion polymer or re-dispersible powder binder as described above yields a target thermal conductivity at a lower materials cost, application cost and insulating coating aesthetic quality cost relative to using only one or two of the above insulating materials in the compositions of the invention.

The insulating compositions of the present invention may be combined with paint additives commonly used in water-based decorative and industrial coatings applications to yield a stable physical form of a paste or a non-drip fluid which could be transferred to substrates or surfaces by trowel or spray application by generally available painting contractors, painters, plasterers and decorating personnel.

The insulating compositions of the present invention combined with common paint additives used in water-based decorative or industrial coatings may be dried to produce a lightweight board with or without the use of air entrapment to produce unexpanded or expanded shapes, e.g boards or panels. In producing such shapes, the compositions of the present invention may be optionally combined with synthetic or natural polymers, cement, wood chips, cork, synthetic wood, mineral or non-mineral fillers, particles and/or paper products.

The thermal conductivity of such a board or panel of 1,5cm thickness formed by combining the compositions of the present invention with an emulsion polymer and then dried to constant weight was found to be 0,06 W/m.K , at a cost significantly lower than a board or panel of the same dimensions comprising only one of either hollow borosilicate glass spheres or ceramic microspheres or thermoset polymer particles with encapsulated wax or thermoplastic microspheres with encapsulated hydrocarbon..

The compositions of the present invention with or without the addition of a film forming plasticizer may also be used as an insulating primer as well as an insulating top coat suitable for application by roller, brush, spatula and trowel or spray techniques. Such a primer or top coat may also be optionally formulated to contain 1-26% of titanium dioxide pigment.

The present invention furthermore provides a lightweight, sunlight reflecting, high viscosity, ready for use, water based, odour-free, low volatile organic compounds (VOC) emitting, sag-free insulation composition with reduced heat transfer for interior and exterior use, for example on vertical and horizontal concrete, steel and non-ferrous metal, wood, brick, plaster board and gypsum board walls, ceilings and roof tiles and slates with the additional benefit of painting over using a wide range of decorative, thermally insulating, sunlight reflecting and protective coatings in white and in-store tinted colours, faux and textured finishes. The material of the present invention may also be used to achieve thermal insulation of pipes, static and mobile cylinders and tanks with the additional benefit of painting over using a wide range of decorative and industrial coatings in white and in-store tinted colours, faux, and textured finishes.

The insulating compositions of the present invention in the form of a paste, panel or board, primer, top coat and plaster or render may be prepared according to the following process:
80% of the initial water in the formulation is placed in a metal or plastic cylindrical container such as a plastic bucket and the optional wetting and dispersing additive (such as Coatex P-90 (Coatex)) is added under slow, low shear dispersion. The hollow borosilicate glass spheres, (for example K1 glass beads from 3M) are added in small aliquots under slow, low shear dispersion and the rate of mixing increased slowly as the resistance of the mixture to dispersion is increased. Wax encapsulated thermoset polymer particles (such as Micronal^{R} 5001 (BASF)) are then added to the disperser and slow, low shear dispersion continued until the mixture appears homogeneous. Spherical thermoplastic polymeric microspheres (such as Expancel^{R} Microspheres 920WE40D24) are added in very small aliquots under continuous low shear dispersion until a constant wet specific gravity is achieved with random samples obtained from the mixture under dispersion. A pre-determined level of a commercial emulsion polymer binder (such as Acronal 290D (BASF) or AC 261 K (Rohm & Haas)) is then added to the mixture in the slow speed disperser and low shear mixing continued for 20-30 minutes.

In preparing a paste, the consistency of the above mixture is assessed by its tendency to adhere to or drip from a horizontally held metal spatula and adjusted with part or all of the remaining water. If the mixture tends to drip, then cellulose based thickening agents (such as Natrosol HE 10K (Aqualon)) or synthetic associative thickeners (such as Coapur XS-71 (Coatex)) may be added after diluting with water to achieve the required paste consistency.

In preparing insulating panels or boards, the insulating composition is placed in a low shear disperser and board forming materials such as particles, gypsum powder, cement powder and/or wood chips are added together with air releasing additives, levelling additives, binders etc. After homogenization, the mixture is placed in a mould sized to suit the dimensions of the insulating panel or board and allowed to dry using ambient or preferably accelerated drying conditions. After drying, the insulating panel or board is released from the mould and trimmed.

In preparing insulating primer or insulating top coat, the insulating composition is placed in a low shear disperser and modifiers such as an aqueous pre-dispersion of titanium dioxide pigment or other water miscible pigment concentrate may be added together with a emulsion polymer or re-dispersible powder binder and other appropriate paint additives. The viscosity of the primer and the top coat are adjusted to permit roller, brush, trowel, spatula and spray application of the products.

In preparing a thermal insulating plaster, the insulating composition is placed in a low shear disperser equipped with a anchor stirrer or scraper blades and appropriate aggregates and fillers added under slow mixing to raise the solids content to 75-85% and the viscosity of the mixture is adjusted to facilitate application using spatula or trowel.

The insulating compositions of the present invention are to be applied over vertical and horizontal substrates such as bricks, concrete, roof tiles, roofing membranes, steel, ferrous and non-ferrous metals, plaster board, insulation board and gypsum board walls with or without plastering or the application of a traditional masonary layer based on cement, sand and lime and over such substrates that have been previously painted with decorative and/or protective coatings. The compositions of the present invention may be applied by a trowel or spray or other suitable tool to a variable thickness, e.g. 0,1-5cm in a single or multi-coat application. After allowing to dry, this insulating product may be overcoated with an insulating primer which may also be derived from the insulating composition of the invention through further modification. Optionally, the primed surface may then be painted over with a common decorative or protective white or tinted top coat to achieve the desired aesthetic finish or preferably with a top coat derived from the insulating composition of the present invention, through further modification. It is also possible to apply powder fines, faux finishes and textured paints, plasters or powder coatings over the primed insulating paste, primer and top coat.

The insulating compositions of the present invention may be applied optionally without further dilution or modification over a plastered surface, a pre-painted surface, a primed surface or over an unprimed substrate. The application may be carried out by using a trowel, spatula, spray or other suitable method in one or two coats to build up a suitable thickness, usually of 0,01-5 cm. A higher insulation compound thickness will result in better insulation properties relative to lower thicknesses of the insulating compound. The drying time of the insulating product, depending on the ambient conditions of temperature, relative humidity and air movement may vary between 24h to 72h within the temperature range of 10-40°C of substrate temperature depending on the prevailing ambient temperature. Upon drying, the insulating product may be overcoated with the insulating primer or insulating top coat or insulating plaster and/or painted over with a wide range of decorative and protective coatings in white or in colours generated through in-store or factory tinting or with a white or tinted top coat derived from the insulating paste of the present invention by suitable modification. The dried insulating paste may also be drilled through cleanly using widely available Electric Drills to insert screws and other supports for curtains, electric lights, signage etc.

Some of the advantages of the compositions of the present invention are as follows:
The materials used in the compositions are readily available and the final material cost of the products is significantly lower than in alternative insulating systems.
The insulating paste, the insulating primer, insulating topcoat and insulating plaster may be applied by professional painters, contractors and by do-it-yourself consumers.
The insulating product, the insulating primer , the insulating topcoat and plaster or render may be applied over interior and exterior walls, ceilings and roofs and subsequently painted over to achieve the desired insulating, sunlight reflecting, decorative and protective finish
The insulating paste, insulating primer, insulating topcoat and plaster or render usage does not require multi-component assemblies, specialized equipment or specialized application personnel
The insulating system of the invention extends the application of energy saving insulation to general households, roofs, offices and buildings through easy application using readily available materials that are suitably combined into a ready for use composition by manufacturers using readily available mixing and processing equipment.

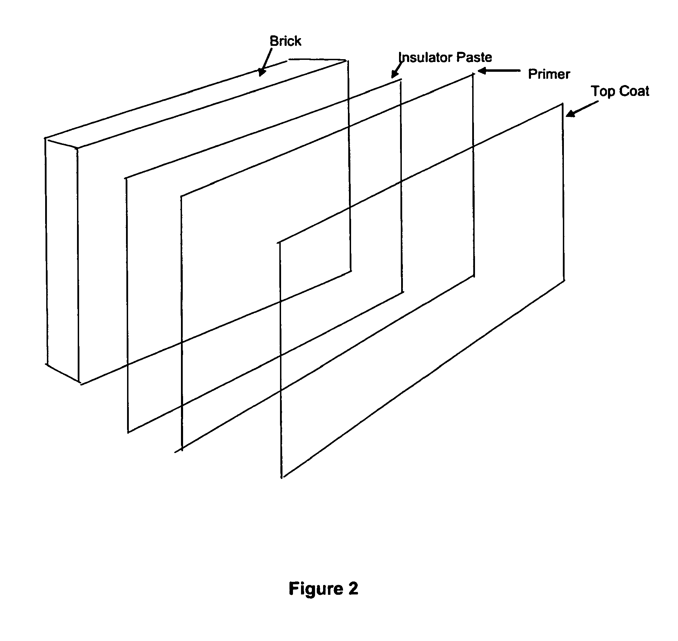

An insulating system generated by a composition of the present invention is illustrated in Figure 2.

The invention may be further understood by reference to the following non-limiting examples:

### Example 1

A dispersion comprising of 45% water, 0,8% of a polyacrylate dispersant, 7% of Titanium dioxide powder, 5% of spherical thermoplastic polymeric microspheres, 15% hollow borosilicate glass spheres and 10% wax encapsulated thermoset polymer particles was prepared in a low shear disperser and 15% styrene acrylic emulsion polymer added under slow stirring. The resultant dispersion was treated with a hydrophobically modified alkali swellable associative thickener at 0,5% and a modified cellulose thickener at 1,5%, 0,3% of a biocide and 1% of a plasticizer to facilitate film formation after application.

The resultant compound was a white paste of high viscosity and non-drip properties.

The following tests were carried out using the above product:
Thickness of coating achieved by trowel application on a plastered wall was 1,2 cm.
The drying time of the compound was 30 minutes dry to touch and 24h through dry at 25°C and 40% relative humidity.
Sagging of the compound was not noticeable.
The compound showed no cracks or shrinkage at the edges.
The hardness of the compound after 72h dry was similar to that of cement/sand plaster (1:4) after 72h dry.
The adhesion of the compound to the substrate was excellent.
Thermal conductivity of the compound was measured using standard test methods (ISO 8301) and thermal conductivity was 0,04 W/m.K at 10°C.

The insulating paste in the above example was applied on a copper pipe by spray application to a thickness of 1 cm. Water held at 80°C was introduced into the insulated pipe and the temperature of the water inside the pipe measured using a thermocouple. An un-insulated copper pipe of the same dimensions was filled with water held at 80°C and the temperature of the water inside the pipe also measured using a thermocouple.

The following water temperatures were recorded:

| Time (Hours) | Insulated Pipe | Un-insulated Pipe |
|---|---|---|
| 0 | 80°C | 80°C |
| 0,5 | 79°C | 74°C |
| 1 | 78°C | 70°C |
| 1,5 | 76°C | 68°C |
| 2 | 75°C | 61°C |
| 2,5 | 74°C | 54°C |

Examples 2, 3 4 and 5 are outside the scope of the present invention and illustrate the importance of the concurrent presence of the four ingredients in the insulating compositions of the invention.

### Example 2

A dispersion comprising of 45% water, 0,8% of a polyacrylate dispersant, 7% of Titanium dioxide powder, 5% of spherical thermoplastic polymeric microspheres, 0% hollow borosilicate glass spheres and 25% wax encapsulated thermoset polymer particles was prepared in a low shear disperser and 15% styrene acrylic binder added under slow stirring. The resultant dispersion was treated with a hydrophobically modified alkali swellable associative thickener at 0,5% and a modified cellulose thickener at 1,5%, 0,3% of a biocide and 1% of a plasticizer to facilitate film formation after application.

The resultant compound was a white paste of high viscosity and non-drip properties.

The following tests were carried out using the above product:
Thickness of coating achieved by trowel application on a plastered wall was 1,2 cm. but a high level of sagging and product wastage occurred during application.
The drying time of the compound was 60 minutes dry to touch and 60h through dry at 25°C and 40% relative humidity.
Sagging of the compound was noticeable after drying.
The compound showed significant level of cracks and shrinkage at the edges.
The hardness of the compound after 72h dry was lower than that of Example 1 after 72h dry.
The adhesion of the compound to the substrate was excellent.
Thermal conductivity of the compound was measured using standard test methods (ISO 8301) and thermal conductivity was 0,14 W/m.K at 10°C.
The product cost was almost three times higher than the product cost of Example 1.

### Example 3

A dispersion comprising of 38% water, 0,8% of a polyacrylate dispersant, 7% of Titanium dioxide powder, 0% of spherical thermoplastic polymeric microspheres, 25% hollow borosilicate glass spheres and 10% wax encapsulated thermoset polymer particles was prepared in a low shear disperser and 15% styrene acrylic binder added under slow stirring. The resultant dispersion was treated with a hydrophobically modified alkali swellable associative thickener at 0,5% and a modified cellulose thickener at 1,5%, 0,3% of a biocide and 1% of a plasticizer to facilitate film formation after application.

The resultant compound was a white paste of high viscosity and non-drip properties.

The following tests were carried out using the above product:
Thickness of coating achieved by trowel application on a plastered wall was 1,2 cm..
The drying time of the compound was 30 minutes dry to touch and 30h through dry at 25°C and 40% relative humidity
No sagging of the compound was noticeable after drying
The compound showed significant level of cracks and shrinkage at the edges.
The hardness of the compound after 72h dry was similar that of Example 1 after 72h dry
The adhesion of the compound to the substrate was excellent
Thermal conductivity of the compound was measured using standard test methods (ISO 8301) and thermal conductivity was 0,07 W/m.K at 10°C
The product cost was almost two times higher than the product cost of Example 1.

### Example 4

A dispersion comprising of 38% water, 0,8% of a polyacrylate dispersant, 7% of Titanium dioxide powder, 5% of spherical thermoplastic polymeric microspheres, 30 % hollow borosilicate glass spheres and 0% wax encapsulated thermoset polymer particles was prepared in a low shear disperser and 15% styrene acrylic binder added under slow stirring. The resultant dispersion was treated with a hydrophobically modified alkali swellable associative thickener at 0,5% and a modified cellulose thickener at 1,5%, 0,3% of a biocide and 1% of a plasticizer to facilitate film formation after application.

The resultant compound was a white paste of high viscosity and non-drip properties.

The following tests were carried out using the above product:
Thickness of coating achieved by trowel application on a plastered wall was 1,2 cm..
Application was difficult with poor levelling and spreading.
The drying time of the compound was 20 minutes dry to touch and 24h through dry at 25°C and 40% relative humidity.
No sagging of the compound was noticeable after drying.
The compound showed significant level of cracks and shrinkage at the edges.
The hardness of the compound after 72h dry was similar that of Example 1 after 72h dry
The adhesion of the compound to the substrate was excellent.
Thermal conductivity of the compound was measured using standard test methods (ISO 8301) and thermal conductivity was 0,06 W/m.K at 10°C.
The product cost was similar to the product cost of Example 1.

### Example 5

A dispersion comprising of 38% water, 0,8% of a polyacrylate dispersant, 7% of Titanium dioxide powder, 5% of spherical thermoplastic polymeric microspheres, 30 % hollow borosilicate glass spheres and 15% wax encapsulated thermoset polymer particles was prepared in a low shear disperser and 0% styrene acrylic binder added under slow stirring. The resultant dispersion was treated with a hydrophobically modified alkali swellable associative thickener at 0,5% and a modified cellulose thickener at 1,5%, 0,3% of a biocide and 1% of a plasticizer to facilitate film formation after application.

The resultant compound was a white paste of high viscosity and non-drip properties.

The following tests were carried out using the above product:
No uniform coating was achieved by trowel application on a plastered wall.
Application was difficult with poor adhesion, levelling and spreading.
The drying time of the compound was 20 minutes dry to touch and 24h through dry at 25°C and 40% relative humidity.
Excessive sagging of the compound was noticeable before and after drying.
The compound showed very significant level of cracks and shrinkage at the edges.
The hardness of the compound after 72h dry was very low with powdery particle separation.
The adhesion of the compound to the substrate was very poor.
Thermal conductivity of the compound was not measurable using standard test methods (ISO 8301) due to poor sample integrity caused by low cohesive strength.
The product cost was similar to the product cost of Example 1.

### Example 6

A dispersion comprising of 41% water, 7% of spherical thermoplastic polymeric microspheres, 15% hollow borosilicate glass spheres and 15% wax encapsulated thermoset polymer particles was prepared in a low shear disperser and 20% styrene acrylic binder added under slow stirring. The resultant dispersion was treated with an associative thickener at 0,5%, 0,3% of a biocide and 1% of a plasticizer to facilitate film formation after application.

The resultant compound was a white paste of high viscosity and non-drip properties.

The following tests were carried out using the above product:
Thickness of coating achieved by trowel application on a plastered wall was 1,5 cm.
The drying time of the compound was 40 minutes dry to touch and 48h through dry at 25°C and 40% relative humidity.
Sagging of the compound was not noticeable.
The compound showed no cracks or shrinkage at the edges.
The hardness of the compound after 72h dry was similar to that of cement/sand plaster after 72h dry.
The adhesion of the compound to the substrate was excellent.
Thermal conductivity of the compound was measured using standard test methods (ISO 8301) and thermal conductivity was 0,025 W/m.K at 10°C.

### Example 7

The paste obtained in Example 6 was placed in a low shear disperser and 15% of a fine particle siloxane emulsion polymer added under slow stirring. A polyurethane associative thickener such as Coapur XS-71 from Coatex was added slowly until the desired application viscosity of 95KU and ICI of 0,8 P was obtained. The resultant product was a paint with a consistency suitable for roller or brush application.

The product was applied as a primer, directly over a fibre cement panel by roller to achieve a film thickness of 25 microns and over a fibre cement panel coated with the product obtained in Example 6.

In both cases adhesion, alkali resistance, overcoatability with water based decorative top coat paints were tested and found to be excellent.

The primer was separately tested and found to have a thermal conductivity of 0.035 W/m.K.

### Example 8

The paste obtained in Example 1 was mixed 1:3 with gypsum powder used in gypsum board manufacture and the required amount of water and an air release agent added to produce a paste that was easily filled into a metal mould coated with a release agent. The contents of the mould were allowed to dry in an oven at 60°C for 8 hours under gentle vibration to compact the contents. The panel that was obtained after releasing from the mould was found to have the following properties: Weight Per Unit Area: 4 Kg/ m².

Thermal Conductivity: 0, 12 W/m.K.

### Example 9

The paste obtained in Example 6 was placed in a low shear disperser and 15% of a pure acrylic emulsion polymer, 10% of Titanium Dioxide Pigment Paste (60% Pigment) and associative thickeners added under slow speed stirring to realize a paint with a viscosity of 105KU and 1,2 P ICI.

The resultant paint was applied over a fibre cement panel that had a commercial primer applied over it and over a fibre cement panel that had the primer in Example 6 applied over it. A fibre cement panel with a commercial primer on it was also painted over with a commercial thermo-elastic insulating paint.

Typical properties of a paint top coat such as adhesion to the primer, surface finish, UV resistance, mould resistance, water resistance, ease of dirt removal and abrasion resistance were found to be similar for both painted panels.

The thermal conductivity of the coating system of primer and top coat paint obtained was found to be 0,05 W/mK while the commercial thermo-elastic insulating paint was found to have a thermal conductivity of 0,28 W/mK.

### Example 10

The paste obtained in Example 6 was placed in a metal mould with dimensions of 0,5m x 0,4m x 2 cm after applying a release agent on the inside surfaces of the mould. The mould was then placed on a vibratory table for 1 hour to compact the contents before placing it in an air circulating oven at 60°C for 4 hours. The panel cast in the mould was then removed from the mould and allowed to dry to constant weight. The properties of the panel obtained were as follows:
Weight Per Unit Area; 1,6 Kg/m².
Thermal Conductivity: 0,03 W/m.K.

### Example 11

A dispersion comprising of 41% water, 7% of spherical thermoplastic polymeric microspheres, 15% ceramic microspheres and 20% wax encapsulated thermoset polymer particles was prepared in a low shear disperser and 15% styrene acrylic binder added under slow stirring. The resultant dispersion was treated with a modified cellulose thickener at 0,5%, 0,3% of a biocide and 1% of a plasticizer to facilitate film formation after application.

The resultant compound was an off white paste of high viscosity and non-drip properties.

The following tests were carried out using the above product:
Thickness of coating achieved by trowel application on a plastered wall was 1,3 cm.
The drying time of the compound was 40 minutes dry to touch and 48h through dry at 25°C and 40% relative humidity.
Sagging of the compound was not noticeable.
The compound showed no cracks or shrinkage at the edges.
The hardness of the compound after 72h dry was similar to that of cement/sand plaster after 72h dry.
The adhesion of the compound to the substrate was excellent.
Thermal conductivity of the compound was measured using standard test methods (ISO 8301) and thermal conductivity was 0,06 W/m.K at 10°C.

### Example 12

The paste obtained in Example 11 was placed in a metal mould with dimensions of 0,5m x 0,4m x 2 cm after applying a release agent on the inside surfaces of the mould. The mould was then placed on a vibratory table for 1 hour to compact the contents before placing it in an air circulating oven at 60°C for 4 hours. The panel cast in the mould was then removed from the mould and allowed to dry to constant weight. The properties of the panel obtained were as follows:
Weight Per Unit Area: 2,4 Kg/m².
Thermal Conductivity: 0,1 W/m.K.

### Example 13

The paste obtained in Example 6 was placed in a low shear disperser and 15% of a pure acrylic emulsion polymer, 10% of Titanium Dioxide Pigment Paste (60% Pigment) and associative thickeners added under slow speed stirring to realize a paint with a viscosity of 105KU and 1,2 P ICI.

The resultant top coat paint was applied over a fibre cement panel that had a commercial primer applied over it and over a fibre cement panel that had the primer in Example 6 applied over it. A fibre cement panel with a commercial primer on it was also painted over with a commercial thermo-elastic insulating paint.

Typical properties of a paint top coat such as adhesion to the primer, surface finish, UV resistance, mould resistance, water resistance, ease of dirt removal and abrasion resistance were found to be similar for both painted panels.

At the same thickness, the thermal conductivity of the coating system of primer in Example 6 and top coat paint obtained in Example 13 was found to be 0,035 W/mK while the commercial thermo-elastic insulating paint was found to have a thermal conductivity of 0,28 W/mK.

### Example 14

A dispersion comprising of 45% water, 4% of spherical thermoplastic polymeric microspheres, 15% hollow borosilicate glass spheres and 20% wax encapsulated thermoset polymer particles was prepared in a low shear disperser and 12% re-dispersible powder binder added under slow stirring. The resultant dispersion was treated with a modified cellulose thickener at 0,5%, 0,3% of a biocide and 1% of a plasticizer to facilitate film formation after application.

The resultant compound was an off white paste of high viscosity and non-drip properties.

The following tests were carried out using the above product:
Thickness of coating achieved by trowel application on a plastered wall was 1,6 cm.
The drying time of the compound was 60 minutes dry to touch and 48h through dry at 25°C and 40% relative humidity.
Sagging of the compound was not noticeable.
The compound showed no cracks or shrinkage at the edges.
The hardness of the compound after 72h dry was similar to that of cement/sand plaster after 72h dry.
The adhesion of the compound to the substrate was excellent.
Thermal conductivity of the compound was measured using standard test methods (ISO 8301) and thermal conductivity was 0,16 W/m.K at 10°C.

### Example 15

The paste obtained in Example 14 was mixed with a 5:1 blend of calcium carbonate and white cement powder and placed in a metal mould with dimensions of 0,5m x 0,4m x 2 cm after applying a release agent on the inside surfaces of the mould. The mould was then placed on a vibratory table for 1 hour to compact the contents before placing it in an air circulating oven at 60°C for 4 hours. The panel cast in the mould was then removed from the mould and allowed to dry to constant weight. The properties of the panel obtained were as follows:
Weight Per Unit Area: 5,2 Kg/m²
Thermal Conductivity: 0,17 W/m.K.

### Example 16

The paste obtained in Example 6 was placed in a low shear mixer fitted with an anchor stirrer. A styrene acrylic emulsion (Lipaton AE 4620) recommended for formulating plasters was added to bring the total emulsion level to 18,5% and Titanium Dioxide added as a pigment paste to bring its final level to 3% and Durcal 40, Durcal 130, Plastorit 1 and Carolith 1500 added to bring their final levels to 8%, 6%, 6% and 20% respectively. The level of water was adjusted to yield a solid content of 80% in the final product.

The final product is a white plaster suitable for use as a thermal insulating plaster for exterior walls. The specific gravity of the product in this example was 1,5 g/ml and the thermal conductivity was measured at 0, 25 W/mK, when used in combination with the insulating paste in Example 6 and the insulating primer in Example 7.

## Claims

1. An insulating composition in the form of an aqueous dispersion comprising 3-18 weight % of hollow borosilicate glass spheres or ceramic microspheres, 5-30 weight % of wax encapsulated thermoset particles, 0.2-10 weight % of spherical thermoplastic microspheres and 5-40 weight % of emulsion polymer or re-dispersible powder binder.

2. An insulating composition according to claim 1, wherein the amount of borosilicate glass spheres or ceramic microspheres is 12-18 weight %.

3. An insulating composition according to claim 2, wherein the amount of borosilicate glass spheres or ceramic microspheres is 14-16 weight %.

4. An insulating composition according to anyone of claims 1 to 3, wherein the amount of wax encapsulated thermoset particles is 10-20 weight %.

5. An insulating composition according to claim 4, wherein the amount of wax encapsulated thermoset particles is 14-16 weight %.

6. An insulating composition according to anyone of the preceding claims, wherein the amount of spherical thermoplastic microspheres is 5-10 weight %.

7. An insulating composition according to claim 6, wherein the amount of spherical thermoplastic microspheres is 6-8 weight %.

8. An insulating composition according to anyone of the preceding claims wherein the amount of emulsion polymer or re-dispersible powder binder is 10-30 weight %.

9. An insulating composition according to anyone of the preceding claims wherein the amount of emulsion polymer or re-dispersible powder binder is 12-25 weight %.

10. Use of an insulating composition of anyone of the preceding claims for the preparation of an insulating paste, panel, board, paint or plaster.

11. An insulating paste, panel, board, paint or plaster prepared from the composition of anyone of claims 1-9.

## Patentansprüche

1. Isolierende Zusammensetzung in Form einer wässrigen Dispersion bestehend zu 3-18 Gewichts-% aus Borosilikatglas - Hohlkugeln oder Keramik-Mikrosphären, zu 5-30 Gewichts-% aus mit Wachs verkapselten Duroplast- Partikeln , zu 0.2-10 Gewichts-% aus kugelförmigen thermoplastischen Mikrosphären und zu 5-40 Gewichts-% aus Emulsionspolymer oder redispergierbarem Pulverbinder.

2. Isolierende Zusammensetzung nach Anspruch 1 mit einem Borosilikatglas-Hohlkugel- bzw. Keramik-Mikrosphärenanteil von 12-18 Gewichts-%.

3. Isolierende Zusammensetzung nach Anspruch 2 mit einem Borosilikatglas-Hohlkugel- bzw. Keramik-Mikrosphärenanteil von 14-16 Gewichts-%.

4. Isolierende Zusammensetzung nach einem der Ansprüche 1-3 mit einem Anteil an mit Wachs verkapselten wärmegehärteten Partikeln von10-20 Gewichts%.

5. Isolierende Zusammensetzung nach Anspruch 4 mit einem Anteil an mit Wachs verkapselten Duroplast- Partikeln von 14-16 Gewichts-%.

6. Isolierende Zusammensetzung nach einem der vorstehenden Ansprüche mit einem Anteil an kugelförmigen thermoplastischen Mikrosphären von 5-10 Gewichts-%.

7. Isolierende Zusammensetzung nach Anspruch 6 mit einem Anteil an kugelförmigen thermoplastischen Mikrosphären von 6-8 Gewichts-%.

8. Isolierende Zusammensetzung nach einem der vorstehenden Ansprüche mit einem Anteil an Emulsionspolymer bzw. redispergierbarem Pulverbinder von 10-30 Gewichts-%.

9. Isolierende Zusammensetzung nach einem der vorstehenden Ansprüche mit einem Anteil an Emulsionspolymer bzw. redispergierbarem Pulverbinder von 12-25 Gewichts-%

10. Verwendung einer isolierenden Zusammensetzung nach einem der vorstehenden Ansprüche zur Vorbereitung einer isolierenden Paste, Tafel, Platte, Farbe oder Masse.

11. Isolierende Paste, Tafel, Platte, Farbe oder Masse, zubereitet aus der Zusammensetzung eines der Ansprüche 1-9.

## Revendications

1. Une structure d'isolation thermique en forme d'une dispersion aqueuse, comprenant 3-18% du poids de sphères creuses en verre de borosilicate ou de microsphères en céramique, 5-30% du poids de particules thermodurcissables encapsulées par cire, 0.2-10% du poids de microsphères sphériques thermoplastiques et 5-40% du poids une émulsion polymère ou une poudre de reliure re-dispersable.

2. Une structure d'isolation thermique suivant la revendication 1, où le contenu de sphères en verre de borosilicate ou de microsphères en céramique est 12-18% du poids.

3. Une structure d'isolation thermique suivant la revendication 2, où le contenu de sphères en verre de borosilicate ou de microsphères en céramique est 14-16% du poids.

4. Une structure d'isolation thermique suivant n'importe quelle revendication de 1 à 3, où le contenu en particules thermodurcissables encapsulées par cire est 10-20% du poids.

5. Une structure d'isolation thermique suivant la revendication 4, où le contenu en particules thermodurcissables encapsulées par cire est 14-16% du poids.

6. Une structure d'isolation thermique suivant n'importe quelle des revendications précédentes, où le contenu en microsphères sphériques thermoplastiques est 5-10% du poids.

7. Une structure d'isolation thermique suivant la revendication 6, où le contenu en microsphères sphériques thermoplastiques est 6-8% du poids.

8. Une structure d'isolation thermique suivant n'importe quelle des revendications précédentes, où le contenu d'émulsion polymère ou de poudre de reliure re-dispersable est 10-30% du poids.

9. Une structure d'isolation thermique suivant n'importe quelle des revendications précédentes, où le contenu d'émulsion polymère ou de poudre de reliure re-dispersable est 12-25% du poids.

10. Usage d'une structure d'isolation thermique de n'importe quelle des revendications précédentes, pour la préparation de pâte isolante, de panneaux, de planches, de peintures, ou de plâtre.

11. Une pâte d'isolation thermique, un panneau, une planche, de la peinture, ou de plâtre préparés par la composition de n'importe quelle de revendications de 1-9.
